# EUROPÄISCHE PATENTSCHRIFT

(11) **EP 4 040 022 B1**
(45) Veröffentlichungstag und Bekanntmachung des Hinweises auf die Patenterteilung: **22.07.2026**
(21) Anmeldenummer: 22151972.1
(22) Anmeldetag: 18.01.2022
(51) Int. Cl.: H01R 39/20, F16J 15/3228, F16J 15/16, F16J 15/3204, F16J 15/54, H02K 11/40

(54) **ERDUNGSRING UND ANORDNUNG, DIE EINEN SOLCHEN ERDUNGSRING UMFASST**
GROUNDING RING AND ASSEMBLY COMPRISING SUCH A GROUNDING RING
BAGUE DE MISE À LA TERRE ET AGENCEMENT COMPRENANT UNE TELLE BAGUE DE MISE À LA TERRE

(30) Priorität: 04.02.2021 DE 102021102570
(43) Veröffentlichungstag der Anmeldung: 10.08.2022
(73) Patentinhaber: Carl Freudenberg KG, 69469 Weinheim (DE)
(72) Erfinder: Bantz, Marlene, 67483 Edesheim (DE); Colineau, Francois, 79227 Schallstadt-Leuterberg (DE); Guder, Frank, 67227 Frankenthal (DE); Hintenlang, Günter, 69518 Abtsteinach (DE); Neuberger, Soeren, 68766 Hockenheim (DE); Kutschera, Gerhard, 64646 Heppenheim (DE); Hofmann, Jens, 68305 Mannheim (DE)

(56) Entgegenhaltungen:
- CN-A- 105 305 357
- JP-A- H07 253 165
- US-A1- 2014 041 938
- US-A1- 2016 050 781

## Beschreibung

### Technisches Gebiet

Die Erfindung betrifft einen Erdungsring und eine Anordnung, die einen solchen Erdungsring umfasst.

### Stand der Technik

Ein Erdungsring und eine Anordnung, die einen solchen Erdungsring umfasst, sind aus der DE 10 2018 105 376 A1 bekannt.

Der Erdungsring ist als Vorschaltdichtung für einen Dichtring ausgebildet und besteht aus einem elektrisch leitfähigen Werkstoff, der während seiner bestimmungsgemäßen Verwendung die Oberfläche eines zu erdenden ersten Maschinenelements anliegend berührt. Ein zweites Maschinenelement, das ebenso wie das erste Maschinenelementen aus einem elektrisch leitfähigen Werkstoff besteht und das konzentrisch zu dem ersten Maschinenelement angeordnet ist, ist auf ein definiertes Massepotential geerdet, wobei das erste und das zweite Maschinenelement durch den Erdungsring elektrisch leitend verbunden sind.

Aus der DE 10 2013 000 982 A1 ist eine Dichtung bekannt, die einen Dichtring mit zumindest einer dynamisch beanspruchten Dichtlippe und eine als Erdungsring ausgebildete Vorschaltdichtung umfasst. Die Vorschaltdichtung ist mit axialem Abstand benachbart zur Dichtlippe angeordnet und besteht aus einem elektrisch leitfähigen Werkstoff. Die Dichtlippe und die Vorschaltdichtung umschließen eine abzudichtende Oberfläche eines abzudichtenden ersten Maschinenelements dichtend, wobei das erste Maschinenelement mit radialem Abstand benachbart zu einem zweiten Maschinenelement angeordnet ist. In dem durch den radialen Abstand gebildeten Spalt sind der Dichtring und die Vorschaltdichtung angeordnet. Das zweite Maschinenelement ist auf ein definiertes Massepotential geerdet, wobei das erste und das zweite Maschinenelement von der Vorschaltdichtung jeweils anliegend berührt und dadurch elektrisch leitend miteinander verbunden sind.

Die Vorschaltdichtung ist als Potentialausgleichsring ausgebildet und besteht zum Beispiel aus einem elektrisch leitfähigen, mit PTFE imprägnierten Vliesstoff. Eine mechanische Beschädigung der Maschinenelemente durch einen elektrischen Spannungsdurchschlag ist folglich ausgeschlossen.

Ohne den elektrischen Potentialausgleich könnten mechanische Beschädigungen der gegeneinander abzudichtenden Maschinenelemente dadurch entstehen, dass unterschiedlich große elektrische Potentiale der Maschinenelemente durch einen elektrischen Spannungsdurchschlag ausgeglichen werden. Ein solcher Spannungsdurchschlag ist umso wahrscheinlicher, je enger die Maschinenelemente mit unterschiedlichen elektrischen Potentialen einander benachbart zugeordnet sind. Ein Spannungsdurchschlag kann einen Materialabtrag an dem Maschinenelement mit relativ geringerer Ladung bewirken und eine Veränderung des Materialgefüges in dem Bereich, in dem der Spannungsdurchschlag erfolgt.

Aus der DE 10 2014 010 269 A1 ist eine weitere Vorschaltdichtung bekannt. Die Vorschaltdichtung umfasst eine im Wesentlichen kreisringförmig ausgebildete Scheibe aus einem elektrisch leitfähigen und luftdurchlässigen Werkstoff und einen Tragkörper, wobei die Scheibe - bezogen auf den Tragkörper - als separat erzeugtes Einzelteil ausgebildet und mit dem Tragkörper verbunden ist.

Der Tragkörper kann durch einen Dichtring gebildet sein.

Die Vorschaltdichtung hat nicht nur die Aufgabe eines elektrischen Potentialausgleichs, sondern außerdem die Aufgabe, Verunreinigungen aus der Umgebung an einem Vordringen zur Dichtlippe des Dichtrings zu verhindern. Die Vorschaltdichtung ist eine entkoppelte elektrische Brücke. Unter "entkoppelt" wird in diesem Zusammenhang verstanden, dass die Dichtfunktion eines zum Beispiel mit der Vorschaltdichtung kombinierten Dichtrings von der Funktion der elektrischen Brücke, nämlich einen Spannungsdurchschlag zu vermeiden und einen elektrischen Potentialausgleich zwischen den Maschinenelementen zu bewirken, entkoppelt ist.

Aus der WO 2017/148586 A1 ist ein Wellen-Erdungsring bekannt, der zur Ableitung induzierter Spannungen beziehungsweise elektrischer Ladungen von einem ersten Maschinenelement, vorzugsweise einer Welle, in ein zweites Maschinenelement dient. Der Wellen-Erdungsring hat ein ringförmiges, aus elektrisch leitendem Material bestehendes Gehäuse, das mit dem einen Maschinenelement elektrisch leitend verbunden ist und mit wenigstens einem Ableitelement in elektrisch leitender Verbindung steht. Das Ableitelement besteht ebenfalls aus einem elektrisch leitenden Material und steht mit dem anderen Maschinenelement in elektrisch leitender Verbindung. Das Ableitelement ist ein zumindest über einen Teil seines Umfangs sich erstreckender, scheibenförmiger Ableitkörper.

Aus der JP H07 253165 A ist ein Erdungsring bekannt, gemäß der Präambel von Anspruch 1, der in einer Ferrofluid-Dichtung zur Anwendung gelangt. Das Ferrofluid wird durch ein geeignetes Magnetfeld im Dichtspalt zwischen zwei gegeneinander abzudichtenden Maschinenelementen gehalten.

Der Erdungsring hat einen kreisringförmigen Querschnitt und erstreckt sich, in Umfangsrichtung einer abzudichtenden Welle betrachtet, wellenförmig innerhalb eines Umfangsspalts, der durch die beiden konzentrisch zueinander angeordneten Maschinenelemente begrenzt ist. Der Erdungsring hat die Aufgabe eines elektrischen Potenzialausgleichs. Dadurch sollen mechanische Beschädigungen der Maschinenelemente durch einen elektrischen Spannungsdurchschlag verhindert werden.

Ein weiterer Erdungsring ist aus der CN 105 305 357 A bekannt. Der Erdungsring hat die Form einer Manschette, auf der außenumfangsseitig sich in radialer Richtung erstreckende Schleifkontakte angeordnet sind, die, bezogen auf die Manschette, von einer axialen in eine radiale Richtung umlenkend ausgebildet sind. Die Schleifkontakte sind einander, in Umfangsrichtung betrachtet, mit gleichmäßigem Abstand benachbart zugeordnet, wobei der Umfangsabstand einander benachbarter Schleifkontakte zumindest der Breite der Schleifkontakte in Umfangsrichtung entspricht und auch während der bestimmungsgemäßen Verwendung erhalten bleibt.

Aus der US 2016/050781 A1 ist ein bewegbarer Erdungsring bekannt, der im Zusammenhang mit einer kapazitiv gekoppelten Plasmaverarbeitungskammer mit einstellbarem Zwischenraum zur Anwendung gelangt. Der Erdungsring hat einen im Wesentlichen L-förmigen Querschnitt mit einem kreisringförmig ausgebildeten Axialschenkel, der stirnseitig einerseits mit einem Radialschenkel verbunden ist. Der Radialschenkel weist mehrere, gleichmäßig in Umfangsrichtung verteilt angeordnete und sich in radialer Richtung erstreckende Erhebungen auf.

Aus der US 2014/0041938 A1 ist ein Erdungsadapter bekannt, in dem ein Erdungsring zur Anwendung gelangt. Der Erdungsring umfasst eine kreisringförmig ausgebildete Nabe und mehrere, außenumfangsseitig an der Nabe angeordnete, im Schnitt L-förmige Zungen, die sich in Umfangsrichtung erstrecken. Die in Umfangsrichtung benachbart zueinander angeordneten Zungen sind einander stets mit gleichbleibendem Abstand zugeordnet, wobei sich zwischen den in Umfangsrichtung zueinander benachbart angeordneten Zungen stets ein im Wesentlichen V-förmiger Umfangsspalt befindet.

### Darstellung der Erfindung

Der Erfindung liegt die Aufgabe zu Grunde, einen Erdungsring derart weiterzuentwickeln, dass im Wesentlichen der gesamte Umfang des Maschinenelements, das von den Schleifkontakten anliegend berührt ist, für eine Kontaktierung durch die Schleifkontakte genutzt wird und dadurch unterschiedliche elektrische Potentiale der durch den Erdungsring elektrisch leitend verbundenen Maschinenelemente ausgeglichen werden. Spannungsdurchschläge zwischen den Maschinenelementen sollen wirkungsvoll verhindert werden.

Außerdem soll der Erdungsring in wirtschaftlicher und fertigungstechnischer Hinsicht kostengünstig und prozesssicher herstellbar sein.

Diese Aufgabe wird erfindungsgemäß durch einen Erdungsring nach Anspruch 1 und eine Anordnung nach Anspruch 9 gelöst.

Auf vorteilhafte Ausgestaltungen des Erdungsrings nehmen die auf Anspruch 1 direkt oder indirekt rückbezogenen Ansprüche, auf eine vorteilhafte Ausgestaltung der Anordnung die auf Anspruch 9 direkt oder indirekt rückbezogenen Ansprüche Bezug.

Zur Lösung der Aufgabe ist ein Erdungsring vorgesehen, umfassend eine im Wesentlichen kreisringförmige Nabe und zumindest zwei in radialer Richtung außenseitig an der Nabe angeordnete, sich in Umfangsrichtung erstreckende Schleifkontakte, die im herstellungsbedingten Zustand des Erdungsrings in Umfangsrichtung mit Abstand benachbart zueinander angeordnet sind und mit ihren in Umfangsrichtung einander zugewandten Seiten einen im Wesentlichen V-förmigen Umfangsspalt begrenzen und wobei der Umfangsspalt während der bestimmungsgemäßen Verwendung des Erdungsrings durch die einander zugewandten und einander nicht-überlappenden Seiten im Wesentlichen überbrückt ist.

Die Schleifkontakte des erfindungsgemäßen Erdungsrings sind für eine Außenkontaktierung, in radialer Richtung, vorgesehen. Grundsätzlich gelangt der erfindungsgemäße Erdungsring während seiner bestimmungsgemäßen Verwendung in einer Anordnung mit einem ersten und einem zweiten Maschinenelement zur Anwendung, wobei der Erdungsring und die beiden Maschinenelemente jeweils aus einem elektrisch leitfähigen Werkstoff bestehen. Das erste Maschinenelement, das zum Beispiel durch eine Welle oder Achse gebildet ist, wird vom zweiten Maschinenelement, das durch ein die Welle oder Achse mit radialem Abstand umschließendes Gehäuse gebildet ist, außenumfangsseitig mit radialem Abstand umschlossen, wobei in dem durch den Abstand gebildeten Spalt der außenkontaktierende Erdungsring angeordnet ist. Die beiden Maschinenelemente sind durch den Erdungsring elektrisch leitend miteinander verbunden. Während der bestimmungsgemäßen Verwendung sorgt der Erdungsring dadurch für einen elektrischen Potentialausgleich zwischen den Maschinenelementen und verhindert somit einen elektrischen Spannungsdurchschlag.

Im herstellungsbedingten Zustand weist der Erdungsring im Wesentlichen die Gestalt einer kreisringförmigen Scheibe auf, die in radialer Richtung innenseitig die kreisringförmige Nabe und in radialer Richtung außenseitig die in Umfangsrichtung mit dem Umfangsspalt benachbart zueinander angeordneten Schleifkontakte umfasst.

Während der bestimmungsgemäßen Verwendung, also im eingebauten Zustand des Erdungsrings, ist eine Überdeckung zwischen dem Maschinenelement, an dem die Schleifkontakte anliegen und den Schleifkontakten notwendig, um eine elektrisch leitfähige Kontaktierung stets und auch dann sicherzustellen, wenn das Maschinenelement und die Schleifkontakte nicht exakt konzentrisch zueinander angeordnet sind und/oder das Maschinenelement und/oder die Schleifkontakte während der bestimmungsgemäßen Verwendung eine Unwucht aufweist.

Durch diese notwendige Überdeckung müssen die Schleifkontakte von ihrem herstellungsbedingten Zustand auf einen kleineren Durchmesser für die bestimmungsgemäße Verwendung verdrängt werden, so dass eine Schlitzung zwischen den einzelnen Schleifkontakten unumgänglich ist. Ohne Schlitzung würde der Außenumfang während des Einbaus des Erdungsrings in die Anordnung gestaucht und in Umfangsrichtung Falten werfen.

Die unumgängliche Schlitzung bewirkt jedoch, in Abhängigkeit von der Ausgestaltung der Schlitze, dass normalerweise nicht mehr der gesamte Umfang des benachbarten Maschinenelements von den Schleifkontakten anliegend berührt werden kann.

Wird ein Teil des Innenumfangs des Maschinenelements von den Schleifkontakten nicht anliegend berührt, ist die Wirksamkeit des elektrischen Potentialausgleichs beeinträchtigt, so dass es trotz eines Erdungsrings in der Anordnung zu einem unerwünschten elektrischen Spannungsdurchschlag zwischen den Maschinenelementen kommen kann.

Um das zu verhindern, ist es bei dem erfindungsgemäßen Erdungsring vorgesehen, dass der Umfangsspalt während der bestimmungsgemäßen Verwendung des Erdungsrings durch die einander zugewandten und einander nicht überlappenden Seiten im Wesentlichen überbrückt ist. Ein solcher in radialer Richtung außenkontaktierender Erdungsring hat den Vorteil, dass praktisch der gesamte Innenumfang des an die Schleifkontakte radial außenumfangsseitig angrenzenden Maschinenelements von den Schleifkontakten anliegend berührt wird. Durch die praktisch vollumfängliche Berührung des Innenumfangs des radial an die Schleifkontakte angrenzenden Maschinenelements ist der bestmögliche elektrische Potentialausgleich und die größte Sicherheit gegen elektrische Spannungsdurchschläge und eine Beschädigung der Maschinenelemente gegeben.

Auch ein Überlappen von in Umfangsrichtung benachbart zueinander angeordneten Schleifkontakten während der bestimmungsgemäßen Verwendung wäre nachteilig, weil durch die überlappenden Seiten einander benachbarter Schleifkontakte eine vollumfängliche Berührung des angrenzenden Maschinenelements verhindert wird.

Der Umfangsspalt ist im herstellungsbedingten Zustand des Erdungsrings im Wesentlichen V-förmig begrenzt. Eine solche V-förmige Begrenzung des Umfangsspalts ist in mehrerlei Hinsicht vorteilhaft. Im eingebauten Zustand des Erdungsrings lässt sich der Umfangsspalt im Wesentlichen vollständig überbrücken, ohne dass sich die einander zugewandten Seiten einander benachbarter Schleifkontakte überlappen. Dadurch ist eine besonders gute, praktisch durchgängige Kontaktierung des die Schleifkontakte außenumfangsseitig umgebenden Maschinenelements sichergestellt. Außerdem ist von Vorteil, dass die Schleifkontakte durch den V-förmig begrenzten Umfangsspalt eine besonders gute und kräftige Rückstellwirkung haben, weil die Basis der Schleifkontakte, mit der diese an der Nabe festgelegt sind, vergleichsweise breit ist.

Die Anpresskraft der Schleifkontakte an den Innenumfang des radial benachbart angrenzenden Maschinenelements ist durch die breite Basis erhöht. Dadurch wird auch während einer langen Gebrauchsdauer einer Relaxation vorgebeugt, und die Schleifkontakte liegen stets mit gleichbleibender Vorspannung am benachbart angrenzenden Maschinenelement an.

Nach einer vorteilhaften Ausgestaltung kann es vorgesehen sein, dass die Anzahl der Schleifkontakte 4 bis 50.

Weiter bevorzugt beträgt die Anzahl 8 bis 12.

Durch eine solche Anzahl von Schleifkontakten wird ein guter Kompromiss zwischen kostengünstiger Herstellbarkeit des Erdungsrings und guter Anpassbarkeit der Schleifkontakte an den Innendurchmesser des die Schleifkontakte außenumfangsseitig umschließenden Maschinenelements erreicht. Die Umfangsspalte werden durch die einander zugewandten Seiten einander benachbarter Schleifkontakte im Wesentlichen überbrückt, ohne dass sich die Seiten einander in Umfangsrichtung benachbarter Schleifkontakte nachteilig überlappen.

Der Umfangsspalt kann eine radiale Erstreckung aufweisen, die 2 mm bis 20 mm beträgt. Eine große radiale Erstreckung der Umfangsspalte ist sinnvoll, wenn das erste und das zweite Maschinenelementen jeweils große Durchmesser aufweisen.

Wie zuvor bereits ausgeführt, können die Schleifkontakte auf ihrer der Nabe in radialer Richtung zugewandten Seite eine Basis und auf ihrer in radialer Richtung gegenüberliegenden Seite ein freies Ende aufweisen, wobei die Basis eine erste Breite in Umfangsrichtung aufweist, wobei das freie Ende eine zweite Breite in Umfangsrichtung aufweist und wobei die erste Breite größer als die zweite Breite ist.

Bevorzugt beträgt das Verhältnis aus erster Breite zu zweiter Breite 1,25 bis 1,5. Bei einem solchen Verhältnis lässt sich der Umfangsspalt durch die einander zugewandten Seiten benachbarter Schleifkontakte weitestgehend überbrücken, so dass eine besonders große Kontaktfläche der Schleifkontakte zur Innenumfangsfläche des den Erdungsring umgebenden Maschinenelements besteht. Außerdem weisen bei einem derartigen Verhältnis die Schleifkontakte im eingebauten Zustand während ihrer bestimmungsgemäßen Verwendung eine ausreichend große Rückstellkraft auf, so dass in allen Betriebszuständen einer Anordnung, die den Erdungsring umfasst, eine zuverlässige Kontaktierung und damit ein zuverlässiger elektrischer Potentialausgleich gegeben ist.

Die Nabe und die Schleifkontakte können einstückig ineinander übergehend und materialeinheitlich ausgebildet sein und bestehen aus einem elektrisch leitfähigen Werkstoff.

Der elektrisch leitfähige Werkstoff kann ein metallischer Werkstoff sein. Elektrisch leitfähige metallische Werkstoffe sind in unterschiedlichsten Spezifikationen größtenteils kostengünstig verfügbar. Außerdem sind sie einfach, kostengünstig und prozesssicher zum Erdungsring zu verarbeiten.

Wie zuvor bereits ausgeführt, bestehen der Erdungsring und die beiden Maschinenelemente der Anordnung jeweils aus einem elektrisch leitfähigen Werkstoff, wobei das erste Maschinenelement vom zweiten Maschinenelement mit einem radialen Abstand umschlossen ist und wobei in dem durch den Abstand gebildeten Spalt der in radialer Richtung außenkontaktierende Erdungsring angeordnet ist. Der Erdungsring ist relativ drehfest und elektrisch leitend mit dem ersten Maschinenelement verbunden und berührt das zweite Maschinenelement elektrisch leitend, relativ verdrehbar und in radialer Richtung innenseitig unter elastischer Vorspannung anliegend, wobei das zweite Maschinenelementen das erste Maschinenelement außenumfangsseitig umschließt. Mittels des Erdungsrings sind die beiden Maschinenelemente elektrisch leitend miteinander verbunden; der Erdungsring sorgt für einen elektrischen Potentialausgleich zwischen den beiden Maschinenelementen.

Die Schleifkontakte können dem zweiten Maschinenelement mit einer radial äußeren Überdeckung zugeordnet sein, die 1 mm bis 6 mm beträgt.

Die Schlafkontakte können dem ersten Maschinenelement mit einer radial inneren Überdeckung zugeordnet sein, die 0,2 mm bis 1,2 mm beträgt.

Die zuvor genannten Überdeckungen sorgen für einen besonders zuverlässigen und guten Potenzialausgleich zwischen den Maschinenelementen durch den Erdungsring.

Die Biegerichtung der Schleifkontakte in radialer Richtung außenseitig am zweiten Maschinenelement kann in beide axiale Richtungen ausgeführt sein, je nach Montagerichtung des Erdungsrings.

Der Erdungsring ist bevorzug kraft- und/oder formschlüssig mit dem ersten Maschinenelement verbunden. Dadurch wird eine einfach und kostengünstig herzustellende, drehfeste Verbindung erzeugt.

Ganz generell besteht die Möglichkeit, dass der Erdungsring und das erste Maschinenelement gemeinsam drehen und dass sich die Schleifkontakte des Erdungsrings somit am Innenumfang des stehenden zweiten Maschinenelements abstützen. Auch besteht die Möglichkeit, dass das zweite Maschinenelement um das erste Maschinenelement und den Erdungsring dreht.

Der Stromdurchgang zwischen den Erdungsring und dem ersten Maschinenelementen, mit dem er drehfest verbunden ist, kann alternativ dadurch erfolgen, dass sich die Nabe des Erdungsrings und das erste Maschinenelement unmittelbar anliegend berühren oder mittelbar durch einen elektrisch leitfähigen Kleber.

Bevorzugt bilden das erste Maschinenelement und der Erdungsring eine vormontierbare Einheit, die eine relative Drehbewegung zum zweiten Maschinenelement ausführt.

### Kurzbeschreibung der Zeichnung

Drei Ausführungsbeispiele eines Erdungsrings sind in den Figuren 1a, 1b, 2a, 2b und 3 jeweils schematisch dargestellt und werden nachfolgend näher beschrieben.
In Figur 1a ist ein erfindungsgemäßes Ausführungsbeispiel des Erdungsrings in einer Seitenansicht von rechts und in seinem herstellungsbedingten Zustand gezeigt,
in Figur 1b ist eine erfindungsgemäße exemplarische Anordnung mit dem Erdungsring aus Figur 1a gezeigt,
in Figur 2a ist ein nicht zur Erfindung gehörendes Ausführungsbeispiel eines Erdungsrings, ebenfalls in einer Seitenansicht von rechts und in seinem herstellungsbedingten Zustand gezeigt und
in Figur 2b ist eine exemplarische Anordnung mit dem Erdungsring aus Figur 2a gezeigt.
In Figur 3 ist ein weiteres erfindungsgemäßes Ausführungsbeispiel des Erdungsrings gezeigt, der zweiteilig ausgebildet ist und mit einer radial inneren Überdeckung am ersten Maschinenelement und mit einer radial äußeren Überdeckung am zweiten Maschinenelement jeweils elektrisch leitend anliegt.

### Ausführung der Erfindung

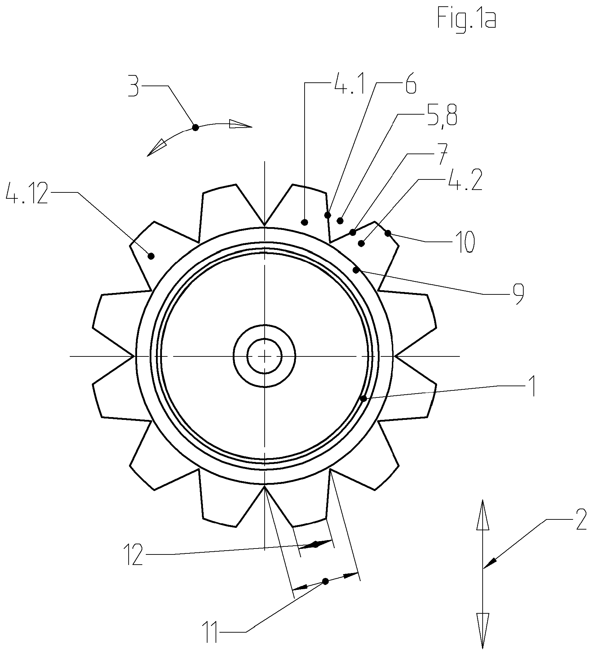

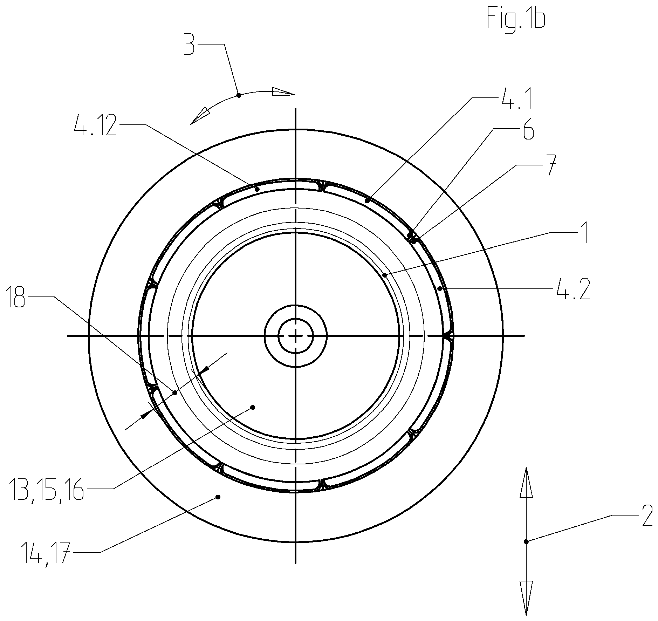

Die Figuren 1a und 1b zeigen ein Ausführungsbeispiel eines Erdungsrings und einer Anordnung, die den Erdungsring umfasst.

In Figur 1a ist der Erdungsring in einer Seitenansicht von rechts in seinem herstellungsbedingten Zustand gezeigt. Der Erdungsring umfasst die kreisringförmige Nabe 1 und zwölf in radialer Richtung 2 außen an der Nabe 1 angeordnete Schleifkontakte 4.1, 4.2, ..., 4.12. Die Schleifkontakte 4.1, 4.2, ..., 4.12 erstrecken sich in Umfangsrichtung 3 und sind in Umfangsrichtung 3 mit Abstand 5 benachbart zueinander angeordnet. Die in Umfangsrichtung 3 einander zugewandten Seiten 6, 7 benachbarter Schleifkontakte 4.1, 4.2, ..., 4.12 begrenzen den Umfangsspalt 8, der im gezeigten Ausführungsbeispiel im Wesentlichen V-förmig begrenzt ist.

In Figur 1b ist der Erdungsring aus Figur 1a ebenfalls in einer Ansicht von rechts, jedoch während seiner bestimmungsgemäßen Verwendung, eingebaut in einer erfindungsgemäßen Anordnung, gezeigt.

Der Erdungsring ist mittels seiner Nabe 1 drehfest mit dem ersten Maschinenelement 13 verbunden, das als Welle 15 oder Achse 16 ausgebildet ist. In radialer Richtung außenumfangsseitig ist der Erdungsring vom zweiten Maschinenelement 14, das im gezeigten Ausführungsbeispiel durch ein Gehäuse 17 gebildet ist, umschlossen. Im Spalt 18 zwischen dem ersten Maschinenelement 13 und dem zweiten Maschinenelement 14 ist der Erdungsring angeordnet.

Der Erdungsring und die beiden Maschinenelementen 13, 14 bestehen jeweils aus einem elektrisch leitfähigen Werkstoff.

Während der Montage des Erdungsrings in den Spalt 18 wird der Außendurchmesser der Schleifkontakte 4.1, 4.2, ..., 4.12 reduziert, um eine für die Anpressung der Schleifkontakte 4.1, 4.2, ..., 4.12 an den Innenumfang des zweiten Maschinenelements 14 notwendige Überdeckung zu erreichen. Durch die Überdeckung berühren die Schleifkontakte 4.1, 4.2, ..., 4.12 den Innenumfang des zweiten Maschinenelements 14 unter radialer Vorspannung anliegend.

Durch die Montage des Erdungsrings zusammen mit dem ersten Maschinenelement 13 in das zweite Maschinenelement 14 schließt sich der Umfangsspalt 8 zwischen den einander benachbarten Schleifkontakten 4.1, 4.2, ..., 4.12 im Wesentlichen vollständig, so dass der Innenumfang des zweiten Maschinenelements 14 in Umfangsrichtung praktisch ununterbrochen von den Schleifkontakten 4.1, 4.2, ..., 4.12 anliegend berührt wird. Dadurch ist ein besonders wirkungsvoller elektrischer Potentialausgleich möglich.

Wie insbesondere in Figur 1a gut zu erkenne ist, ist die Basis 9 der Schleifkontakte 4.1, 4.2, ..., 4.12 auf der der Nabe 1 in radialer Richtung 2 zugewandten Seite breiter als das in radialer Richtung 2 der Basis 9 gegenüberliegende freie Ende 10.

Im gezeigten Ausführungsbeispiel ist das Verhältnis aus der ersten Breite 11 der Basis 9 zur zweiten Breite 12 des freien Endes 10 etwa 1,3.

Die Nabe 1 und die Schleifkontakte 4.1, 4.2, ..., 4.12 sind im gezeigten Ausführungsbeispiel einstückig ineinander übergehend und materialeinheitlich ausgebildet und bestehen aus einem elektrisch leitfähigen, metallischen Werkstoff.

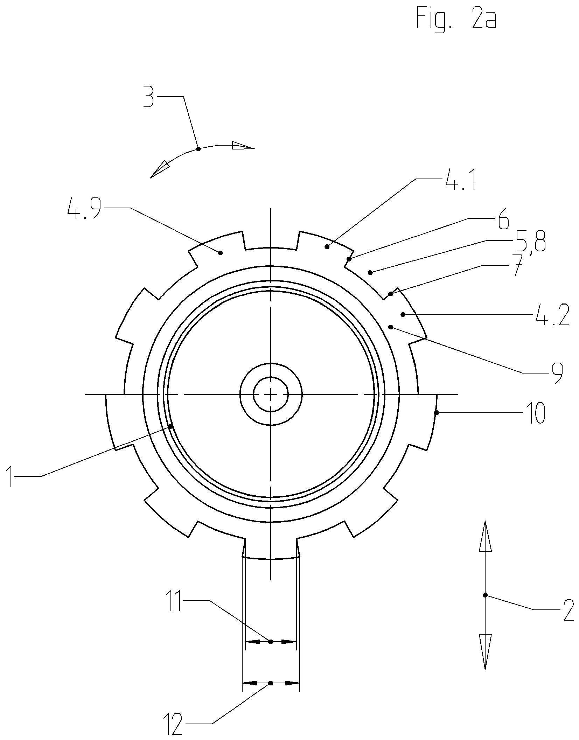

In Figur 2a ist ein nicht-erfindungsgemäßes Ausführungsbeispiel eines Erdungsrings gezeigt, bei dem der Umfangsspalt 8 zwischen den Schleifkontakten 4.1, 4.2, ..., 4.9 U-förmig begrenzt ist.

Bezogen auf den V-förmig begrenzten Umfangsspalt 8 aus Figur 1a ist der U-förmig begrenzte Umfangsspalt 8 aus Figur 2a weniger vorteilhaft, weil die Kontaktfläche der Schleifkontakt 4.1, 4.2, ..., 4.9 zum zweiten Maschinenelement 14 während der bestimmungsgemäßen Verwendung des Erdungsrings etwas kleiner als bei dem Ausführungsbeispiel aus Figur 1a ist.

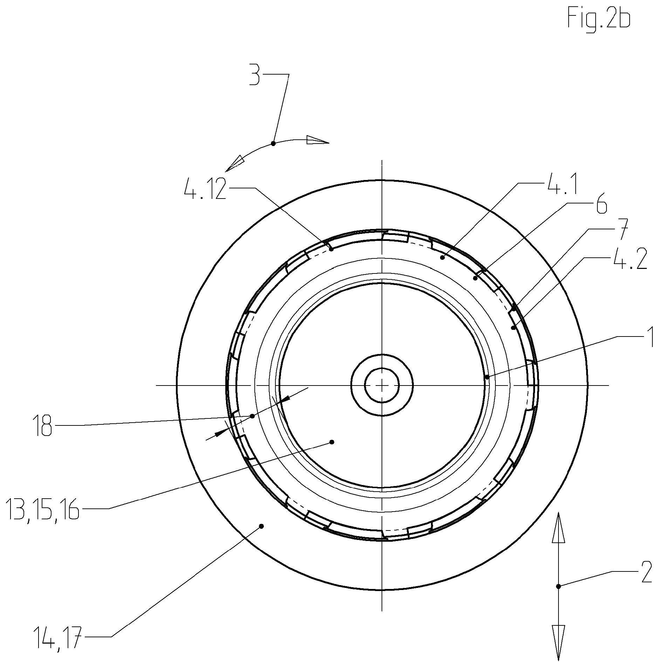

In Figur 2b ist der Erdungsring aus Figur 2a ebenfalls in einer Ansicht von rechts, jedoch während seiner bestimmungsgemäßen Verwendung, eingebaut in einer erfindungsgemäßen Anordnung, gezeigt.

Der Erdungsring aus Figur 1a hat den Vorteil, dass sich die Schleifkontakte 4.1, 4.2, ..., 4.12 / 4.9 während der bestimmungsgemäßen Verwendung nicht gegenseitig überlappen, was zu einer Reduzierung der Kontaktfläche am Innenumfang des zweiten Maschinenelements 14 führen würde.

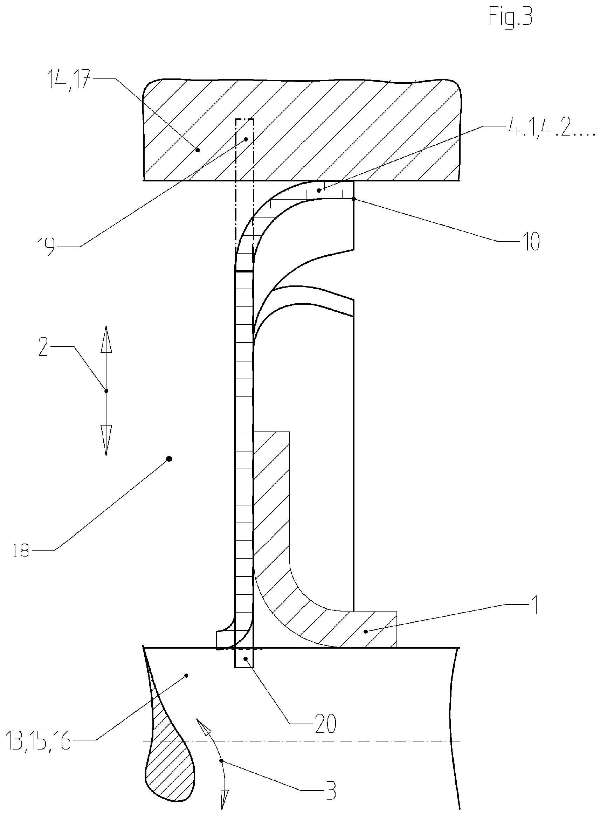

In Figur 3 ist ein weiteres Ausführungsbeispiel des Erdungsrings gezeigt, der zweiteilig ausgebildet ist und mit einer radial inneren Überdeckung 20 am ersten Maschinenelement 13 und mit einer radial äußeren Überdeckung 19 am zweiten Maschinenelement 14 jeweils elektrisch leitend anliegt. Die radial äußere Überdeckung 19 beträgt im hier gezeigten Ausführungsbeispiel etwa 5 mm, die radial innere Überdeckung 20 demgegenüber etwa 1 mm.

Die Umfangsspalte 8 in den zuvor gezeigten Ausführungsbeispielen haben jeweils eine radiale Erstreckung, die 2 mm bis 20 mm beträgt, in Abhängigkeit von der Größe der Durchmesser der beiden Maschinenelemente 13 und 14.

Die Umfangsspalte 8 in den zuvor gezeigten Ausführungsbeispielen haben jeweils eine radiale Erstreckung, die 2 mm bis 20 mm beträgt, in Abhängigkeit von der Größe der Durchmesser der beiden Maschinenelemente 13 und 14.

## Patentansprüche

1. Erdungsring, umfassend eine im Wesentlichen kreisringförmige Nabe (1) und zumindest zwei in radialer Richtung (2) außenseitig an der Nabe (1) angeordnete, sich in Umfangsrichtung (3) erstreckende Schleifkontakte (4.1, 4.2, ...), **dadurch gekennzeichnet, dass** die Schleifkontakte im herstellungsbedingten Zustand des Erdungsrings in Umfangsrichtung (3) mit Abstand (5) benachbart zueinander angeordnet sind und mit ihren in Umfangsrichtung (3) einander zugewandten Seiten (6, 7) einen im Wesentlichen V-förmigen Umfangsspalt (8) begrenzen und dass der Umfangsspalt (8) während der bestimmungsgemäßen Verwendung des Erdungsrings durch die einander zugewandten und einander nicht-überlappenden Seiten (6, 7) im Wesentlichen überbrückt ist.

2. Erdungsring nach Anspruch 1, **dadurch gekennzeichnet, dass** die Anzahl der Schleifkontakte (4.1, 4.2, ...) 4 bis 50 beträgt.

3. Erdungsring nach einem der Ansprüche 1 oder 2, **dadurch gekennzeichnet, dass** die Anzahl der Schleifkontakte (4.1, 4.2, ...) 8 bis 12 beträgt.

4. Erdungsring nach Anspruch 1, **dadurch gekennzeichnet, dass** der Umfangsspalt (8) eine radiale Erstreckung aufweist, die 2 mm bis 20 mm beträgt.

5. Erdungsring nach einem der Ansprüche 1 bis 3, **dadurch gekennzeichnet, dass** die Schleifkontakte (4.1, 4.2, ...) auf ihrer der Nabe (1) in radialer Richtung (2) zugewandten Seite eine Basis (9) und auf ihrer in radialer Richtung (2) gegenüberliegenden Seite ein freies Ende (10) aufweisen, dass die Basis (9) eine erste Breite (11) in Umfangsrichtung (3) aufweist, dass das freie Ende (10) eine zweite Breite (12) in Umfangsrichtung (3) aufweist und dass die erste Breite (11) größer als die zweite Breite (12) ist.

6. Erdungsring nach Anspruch 5, **dadurch gekennzeichnet, dass** das Verhältnis aus erster Breite (11) zu zweiter Breite (12) 1,25 bis 1,5 beträgt.

7. Erdungsring nach einem der Ansprüche 1 bis 6, **dadurch gekennzeichnet, dass** die Nabe (1) und die Schleifkontakte (4.1, 4.2, ...) einstückig ineinander übergehend und materialeinheitlich ausgebildet sind und aus einem elektrisch leitfähigen Werkstoff bestehen.

8. Erdungsring nach Anspruch 7, **dadurch gekennzeichnet, dass** der elektrisch leitfähige Werkstoff ein metallischer Werkstoff ist.

9. Anordnung, umfassend einen Erdungsring nach einem der Ansprüche 1 bis 8 sowie ein erstes (13) und ein zweites Maschinenelement (14), die jeweils aus einem elektrisch leitfähigen Werkstoff bestehen, wobei das erste Maschinenelement (13) durch eine Welle (15) oder Achse (16) und das zweite Maschinenelement (14) durch ein die Welle (15) oder Achse (16) mit radialem Abstand umschließendes Gehäuse (17) gebildet ist, wobei in dem durch den Abstand gebildeten Spalt (18) der in radialer Richtung außenkontaktierende Erdungsring angeordnet ist.

10. Anordnung nach Anspruch 9, **dadurch gekennzeichnet, dass** der Erdungsring relativ drehfest mit dem ersten Maschinenelement (13) verbunden ist und das zweite Maschinenelement (14) relativ verdrehbar und in radialer Richtung (2) innenseitig anliegend berührt.

11. Anordnung nach einem der Ansprüche 9 oder 10, **dadurch gekennzeichnet, dass** die Schleifkontakte (4.1, 4.2, ...) dem zweiten Maschinenelementen (14) mit einer radial äußeren Überdeckung (19) zugeordnet sind, die 1 mm bis 6 mm beträgt.

12. Anordnung nach einem der Ansprüche 9 bis 11, **dadurch gekennzeichnet, dass** die Streifkontakte (4.1, 4.2, ...) dem ersten Maschinenelementen (13) mit einer radial inneren Überdeckung (20) zugeordnet sind, die 0,2 mm bis 1,2 mm beträgt.

13. Anordnung nach einem der Ansprüche 9 oder 12, **dadurch gekennzeichnet, dass** der Erdungsring kraft- und/oder formschlüssig mit dem ersten Maschinenelement (13) verbunden ist.

## Claims

1. Earthing ring, comprising a substantially circular-ring-shaped hub (1) and at least two sliding contacts (4.1, 4.2, ...) which are arranged on the outside of the hub (1) in a radial direction (2) and extend in a circumferential direction (3), **characterized in that**, in the production state of the earthing ring, the sliding contacts are arranged adjacent to one another in the circumferential direction (3) with a spacing (5) and, by way of their sides (6, 7) facing one another in the circumferential direction (3), delimit a substantially V-shaped circumferential gap (8), and **in that**, during the intended use of the earthing ring, the circumferential gap (8) is substantially bridged by the mutually facing and mutually non-overlapping sides (6, 7).

2. Earthing ring according to Claim 1, **characterized in that** the number of sliding contacts (4.1, 4.2, ...) is 4 to 50.

3. Earthing ring according to one of Claims 1 or 2, **characterized in that** the number of sliding contacts (4.1, 4.2, ...) is 8 to 12.

4. Earthing ring according to Claim 1, **characterized in that** the circumferential gap (8) has a radial extent of 2 mm to 20 mm.

5. Earthing ring according to one of Claims 1 to 3, **characterized in that** the sliding contacts (4.1, 4.2, ...) have a base (9) on their side facing the hub (1) in the radial direction (2) and have a free end (10) on their opposite side in the radial direction (2), **in that** the base (9) has a first width (11) in the circumferential direction (3), **in that** the free end (10) has a second width (12) in the circumferential direction (3), and **in that** the first width (11) is greater than the second width (12).

6. Earthing ring according to Claim 5, **characterized in that** the ratio of first width (11) to second width (12) is 1.25 to 1.5.

7. Earthing ring according to one of Claims 1 to 6, **characterized in that** the hub (1) and the sliding contacts (4.1, 4.2, ...) are formed from the same material and in a manner transitioning integrally into one another and consist of an electrically conductive material.

8. Earthing ring according to Claim 7, **characterized in that** the electrically conductive material is a metallic material.

9. Arrangement, comprising an earthing ring according to one of Claims 1 to 8 and a first machine element (13) and a second machine element (14), each of which consists of an electrically conductive material, wherein the first machine element (13) is formed by a shaft (15) or an axle (16) and the second machine element (14) is formed by a housing (17) which surrounds the shaft (15) or axle (16) with a radial spacing, wherein the radially externally contacting earthing ring is arranged in the gap (18) formed by the spacing.

10. Arrangement according to Claim 9, **characterized in that** the earthing ring is connected in a relatively rotationally fixed manner to the first machine element (13), and makes contact with the second machine element (14) relatively rotatably and in a manner abutting at the inside in the radial direction (2).

11. Arrangement according to one of Claims 9 or 10, **characterized in that** the sliding contacts (4.1, 4.2, ...) are assigned to the second machine element (14) with a radially outer overlap (19) of 1 mm to 6 mm.

12. Arrangement according to one of Claims 9 to 11, **characterized in that** the brushing contacts (4.1, 4.2, ...) are assigned to the first machine element (13) with a radially inner overlap (20) of 0.2 mm to 1.2 mm.

13. Arrangement according to one of Claims 9 or 12, **characterized in that** the earthing ring is connected in a force-fitting and/or form-fitting manner to the first machine element (13).

## Revendications

1. Anneau de mise à la terre, comprenant un moyeu (1) essentiellement annulaire et au moins deux contacts de frottement (4.1, 4.2, ...) disposés dans la direction radiale (2) à l'extérieur sur le moyeu (1), s'étendant dans la direction circonférentielle (3), **caractérisé en ce que** les contacts de frottement, dans l'état de l'anneau de mise à la terre résultant de sa fabrication, sont disposés de manière voisine les uns par rapport aux autres dans la direction circonférentielle (3) avec un espacement (5) et délimitent, par leurs côtés (6, 7) orientés les uns vers les autres dans la direction circonférentielle (3), un espace circonférentiel (8) essentiellement en forme de V, et **en ce que** l'espace circonférentiel (8), pendant l'utilisation conforme de l'anneau de mise à la terre, est essentiellement franchi par les côtés (6, 7) orientés les uns vers les autres et ne se chevauchant pas.

2. Anneau de mise à la terre selon la revendication 1, **caractérisé en ce que** le nombre de contacts de frottement (4.1, 4.2, ...) est de 4 à 50.

3. Anneau de mise à la terre selon l'une des revendications 1 ou 2, **caractérisé en ce que** le nombre de contacts de frottement (4.1, 4.2, ...) est de 8 à 12.

4. Anneau de mise à la terre selon la revendication 1, **caractérisé en ce que** l'espace circonférentiel (8) présente une extension radiale de 2 mm à 20 mm.

5. Anneau de mise à la terre selon l'une quelconque des revendications 1 à 3, **caractérisé en ce que** les contacts de frottement (4.1, 4.2, ...) présentent, sur leur côté orienté vers le moyeu (1) dans la direction radiale (2), une base (9) et, sur leur côté opposé dans la direction radiale (2), une extrémité libre (10), **en ce que** la base (9) présente une première largeur (11) dans la direction circonférentielle (3), **en ce que** l'extrémité libre (10) présente une deuxième largeur (12) dans la direction circonférentielle (3), et **en ce que** la première largeur (11) est supérieure à la deuxième largeur (12).

6. Anneau de mise à la terre selon la revendication 5, **caractérisé en ce que** le rapport entre la première largeur (11) et la deuxième largeur (12) est de 1,25 à 1,5.

7. Anneau de mise à la terre selon l'une des revendications 1 à 6, **caractérisé en ce que** le moyeu (1) et les contacts de frottement (4.1, 4.2, ...) sont réalisés d'une seule pièce, en continuité l'un avec l'autre et de manière monomatériau, et sont constitués d'un matériau électriquement conducteur.

8. Anneau de mise à la terre selon la revendication 7, **caractérisé en ce que** le matériau électriquement conducteur est un matériau métallique.

9. Agencement, comprenant un anneau de mise à la terre selon l'une quelconque des revendications 1 à 8 ainsi qu'un premier (13) et un deuxième élément de machine (14), constitués chacun d'un matériau électriquement conducteur, le premier élément de machine (13) étant formé par un arbre (15) ou un axe (16) et le deuxième élément de machine (14) étant formé par un boîtier (17) entourant l'arbre (15) ou l'axe (16) avec un espacement radial, l'anneau de mise à la terre à contact extérieur radial étant disposé dans l'espace (18) formé par l'espacement.

10. Agencement selon la revendication 9, **caractérisé en ce que** l'anneau de mise à la terre est relié au premier élément de machine (13) de manière relativement fixe en rotation et qu'il est en contact avec le deuxième élément de machine (14), qui peut tourner relativement, par appui sur le côté intérieur dans la direction radiale (2).

11. Agencement selon l'une quelconque des revendications 9 ou 10, **caractérisé en ce que** les contacts de frottement (4.1, 4.2, ...) sont associés au deuxième élément de machine (14) avec un recouvrement radial extérieur (19) de 1 mm à 6 mm.

12. Agencement selon l'une quelconque des revendications 9 à 11, **caractérisé en ce que** les contacts à balai (4.1, 4.2, ...) sont associés au premier élément de machine (13) avec un recouvrement radial intérieur (20) de 0,2 mm à 1,2 mm.

13. Agencement selon l'une quelconque des revendications 9 ou 12, **caractérisé en ce que** l'anneau de mise à la terre est relié au premier élément de machine (13) par adhérence et/ou par complémentarité de forme.
